Europäisches Patentamt

European Patent Office

Office européen des brevets

(19)

(11)     EP 0 796 006 B1

(12)     **FASCICULE DE BREVET EUROPEEN**

(45) Date de publication et mention
de la délivrance du brevet:
**30.05.2001   Bulletin 2001/22**

(51) Int Cl.⁷: $H04N\ 3/15$, $G06F\ 17/14$

(21) Numéro de dépôt: **97400577.9**

(22) Date de dépôt: **14.03.1997**

(54) **Procédé pour fournir une représentation d'une scène optique par transformation de Walsh-Hadamard et capteur d'image mettant en oeuvre ce procédé**

Verfahren zur Darstellung einer optischen Szene mittels Walsh-Hadamard Transformation und Bildsensor zur Ausführung dieses Verfahrens

Method of providing a representation of an optical scene by the Walsh-Hadamard transform and an image sensor implementing the method

(84) Etats contractants désignés:
**DE GB**

(30) Priorité: **15.03.1996   FR 9603293**

(43) Date de publication de la demande:
**17.09.1997   Bulletin 1997/38**

(73) Titulaire: **FRANCE TELECOM**
**75015 Paris (FR)**

(72) Inventeur: **Ni, Yang**
**91940 Les Ulis (FR)**

(74) Mandataire: **Fort, Jacques**
**CABINET PLASSERAUD**
**84, rue d'Amsterdam**
**75440 Paris Cedex 09 (FR)**

(56) Documents cités:
**US-A- 3 775 602          US-A- 3 925 646**
**US-A- 4 011 441          US-A- 4 129 887**
**US-A- 4 460 969          US-A- 4 590 608**
**US-A- 5 262 871**

- **PROCEEDINGS OF THE INTERNATIONAL SYMPOSIUM ON CIRCUITS AND SYSTEMS, SAN DIEGO, MAY 10 - 13, 1992, vol. 1 OF 6, 10 Mai 1992, INSTITUTE OF ELECTRICAL AND ELECTRONICS ENGINEERS, pages 137-140, XP000337262 FALKOWSKI B J: "GENERALIZED WALSH TRANSFORMS OF BOOLEAN FUNCTIONS"**

EP 0 796 006 B1

## Description

La présente invention concerne un procédé pour fournir une représentation d'une scène optique par transformation de Walsh-Hadamard, et un capteur d'image mettant en oeuvre ce procédé. Ces dernières années, les réseaux informatiques et les technologies multimédia ont connu un développement rapide. La compression de données est donc devenue un enjeu majeur. En particulier, de nombreux procédés de codage ont vu le jour dans le domaine de la compression des images. Parmi les procédés utilisés, les codages par transformation orthogonale permettent d'obtenir, à qualité d'image égale, des taux de compression supérieurs à ceux obtenus par des procédés du type à prédiction linéaire. De plus, les systèmes de codage par transformation orthogonale sont nettement moins sensibles aux erreurs, de transmission par exemple, que les systèmes à prédiction.

Si de très nombreuses transformations ont été étudiées, seules quelques-unes sont actuellement effectivement utilisées : la transformation de Karhunen-Loève, qui en théorie fournit les meilleurs résultats, mais reste difficile à mettre en oeuvre; la transformation en cosinus discret (DCT), qui constitue une bonne approximation de la transformation de Karhunen-Loève qui est retenue par un certain nombre de normalisations, et dont la mise en oeuvre est plus facile; et la transformation de Walsh-Hadamard, bien adaptée aux calculateurs numériques.

Cette dernière transformation consiste, comme la transformation de Fourier, en une décomposition du signal considéré sur un ensemble de vecteurs de base orthogonaux. La transformation de Walsh-Hadamard peut par ailleurs être appliquée à des signaux multidimensionnels. A la différence de la transformation de Fourier, elle utilise pour la décomposition du signal considéré un ensemble de vecteurs non sinusoïdaux.

La présente invention a pour objet un procédé et un capteur d'image intégrant un module qui met en oeuvre la transformation de Walsh-Hadamard, afin de fournir en sortie, non pas des valeurs de niveaux de gris associés à des éléments d'image, ou pixels, de l'image transformée, mais directement les valeurs des coefficients de la transformée de Walsh-Hadamard d'une scène optique captée.

Les capteurs d'image classiques mettent en oeuvre un procédé de codage où : on capte une scène optique sous forme d'un signal analogique, qu'on appellera l'image captée ; on transforme l'image captée en une image numérique; on lit et on mémorise les valeurs de niveaux de gris de la totalité des éléments d'image numérique ; on applique à l'image numérique une transformation, qui peut être la transformation de Walsh-Hadamard; et on sous-échantillonne le signal d'image transformée afin de reconstruire l'image captée.

Le document US 4,590,608 décrit un procédé pour fournir une représentation d'une image par la transformation de Walsh, comprenant les étapes de conversion de l'énergie optique de l'image en un signal vidéo à l'aide d'une matrice de détecteurs analogiques à deux dimensions, de génération d'un signal de fonction de Walsh selon une fonction de Walsh à deux dimensions, et de multiplication dudit signal vidéo par ledit signal de fonction de Walsh pour produire un signal définissant les coefficients de la transformée de Walsh représentatifs des composantes de la décomposition de l'image. Le signal de fonction de Walsh est obtenu par la combinaison de deux signaux de fonction de Walsh, respectivement X et Y, dans une opération OU-exclusif.

Les procédés utilisés comportent une succession très longue d'étapes coûteuses en temps de calcul. Les capteurs d'image de l'art antérieur nécessitent donc l'utilisation de composants électroniques très rapides et donc chers, pour ne pas exiger un compromis entre le temps de calcul et la résolution de l'image.

Dans le but de remédier à ces inconvénients, la présente invention propose un procédé pour fournir une représentation d'une scène optique par transformation de Walsh-Hadamard conforme à la revendication 1.

La présente invention propose également un capteur d'image mettant en oeuvre le procédé de codage ci-dessus, ce capteur comprenant :

- NxN moyens photodétecteurs agencés sous forme d'une matrice à N rangées et N colonnes, pour transformer un signal lumineux $L(i,j)$, $0 \leq i \leq N-1$, $0 \leq j \leq N-1$, reçu en provenance de la scène optique dans la ième rangée et la jième colonne, en un signal de courant électrique $x(i,j)$,
- $p(n)$ premiers moyens générateurs de fonction de Walsh, numérotés par leur rang r, $0 \leq r \leq p(n)-1$, qui comprennent chacun

  • des moyens de calcul qui reçoivent le bit $K_{r,n}$ en entrée, calculent la valeur de $f(r,n,i)$ pour tout i, $0 \leq i \leq N-1$, et fournissent en sortie le bit "0" si $f(r,n,i) = +1$ ou le bit "1" si $f(r,n,1) = -1$, et
  • N opérateurs OU-exclusif disposés en parallèle, une première entrée de chacun des N opérateurs de rang r $\geq 0$ étant connectée à la sortie desdits moyens de calcul, et une seconde entrée de chacun des N opérateurs de rang r $\geq 1$ étant respectivement connectée à la sortie correspondante de chacun des N opérateurs OU-exclusif de rang r-1, la seconde entrée de chacun des N opérateurs de rang r = 0 étant alimentée par un niveau logique "0" d'initialisation,

  les N opérateurs OU-exclusif de rang r = p (n)-1 fournissant en sortie N bits codant les N fonctions de Walsh W(n,i) pour tout i, $0 \leq i \leq N-1$, à savoir, valant 0 si W(n, i) = +1 ou valant 1 si W(n,i) = -1 ;

- des premiers moyens de mémoire, comprenant N entrées respectivement connectées aux N sorties des premiers moyens générateurs de rang p(n)-1, pour mémoriser la valeur de W(n,i) pour tout i, $0 \leq i \leq N-1$ ;
- p(m) seconds moyens générateurs de fonction de Walsh, numérotés par leur rang r, $0 \leq r \leq p(m)-1$, qui comprennent chacun

  • des moyens de calcul qui reçoivent le bit $K_{r,m}$ en entrée, calculent la valeur de f(r,m,j) pour tout j, $0 \leq j \leq N-1$, et fournissent en sortie le bit "0" si f(r,m,j) = +1 ou le bit "1" si f(r,m,j) = -1, et

    N opérateurs OU-exclusif disposés en parallèle, une première entrée de chacun des N opérateurs de rang $r \geq 0$ étant connectée à la sortie desdits moyens de calcul, et une seconde entrée de chacun des N opérateurs de rang $r \geq 1$ étant respectivement connectée à la sortie correspondante de chacun des N opérateurs de rang r-1, la seconde entrée de chacun des N opérateurs de rang r = 0 étant alimentée par un niveau logique "0" d'initialisation,

    les N opérateurs OU-exclusif de rang r = p(m)-1 fournissant en sortie N bits codant les N fonctions de Walsh W(m,j) pour tout j, $0 \leq j \leq N-1$, à savoir, valant 0 si W(m,j) = +1 ou valant 1 si W(m,j) = -1; et

- des seconds moyens de mémoire, comprenant N entrées respectivement connectées aux N sorties des seconds moyens générateurs de rang p(m)-1, pour mémoriser la valeur de W(m,j) pour tout j, $0 \leq j \leq N-1$; et
- NxN éléments à état solide connectés respectivement à l'une des N sorties des premiers moyens de mémoire et à l'une des N sorties des seconds moyens de mémoire, lesquels NxN éléments à état solide calculent respectivement la valeur de la variable binaire codant l'un des NxN masques de Walsh-Hadamard Mnm(i,j) et affectent le courant x(i,j) correspondant d'un sens conventionnel positif ou négatif suivant le niveau logique de la variable binaire codant Mnm(i,j), la sommation selon les lois de Kirchhoff des courants ainsi obtenus fournissant en sortie NxN coefficients de transformée de Walsh-Hadamard X(n,m), $0 \leq n \leq N-1$, $0 \leq m \leq N-1$, de la scène optique captée.

Les caractéristiques ci-dessus ainsi que d'autres apparaîtront mieux à la lecture de la description qui suit d'un mode particulier de réalisation de l'invention donné à titre d'exemple non limitatif et d'une variante. La description se réfère aux dessins qui l'accompagnent, dans lesquels:

- la figure 1 est un schéma représentant la structure globale d'un capteur d'image selon la présente invention;
- la figure 2 est un ensemble de courbes représentant les huit premières fonctions de Walsh-Hadamard;
- la figure 3 représente les seize masques de pondération de Walsh-Hadamard associés à une transformation sur une image carrée de 4 x 4 pixels;
- la figure 4 est un schéma électrique représentant sous forme symbolique une étape du calcul des coefficients de transformée de Walsh-Hadamard par sommation de courants, dans un mode particulier de réalisation;
- les figures 5A et 5B sont des schémas symboliques représentant, dans un mode particulier de réalisation, un réseau de composants électroniques en cascade engendrant des fonctions de Walsh discrètes à une dimension;
- la figure 6 est un schéma représentant, en vue partiellement agrandie, dans un mode particulier de réalisation, un circuit électronique engendrant un masque de Walsh-Hadamard à deux dimensions à partir de deux fonctions de Walsh discrètes à une dimension;
- la figure 7 est un schéma électronique représentant un commutateur complexe formé d'un réseau de transistors NMOS, qui produit simultanément un masque de Walsh-Hadamard et une contribution à la somme pondérée de l'ensemble des masques.

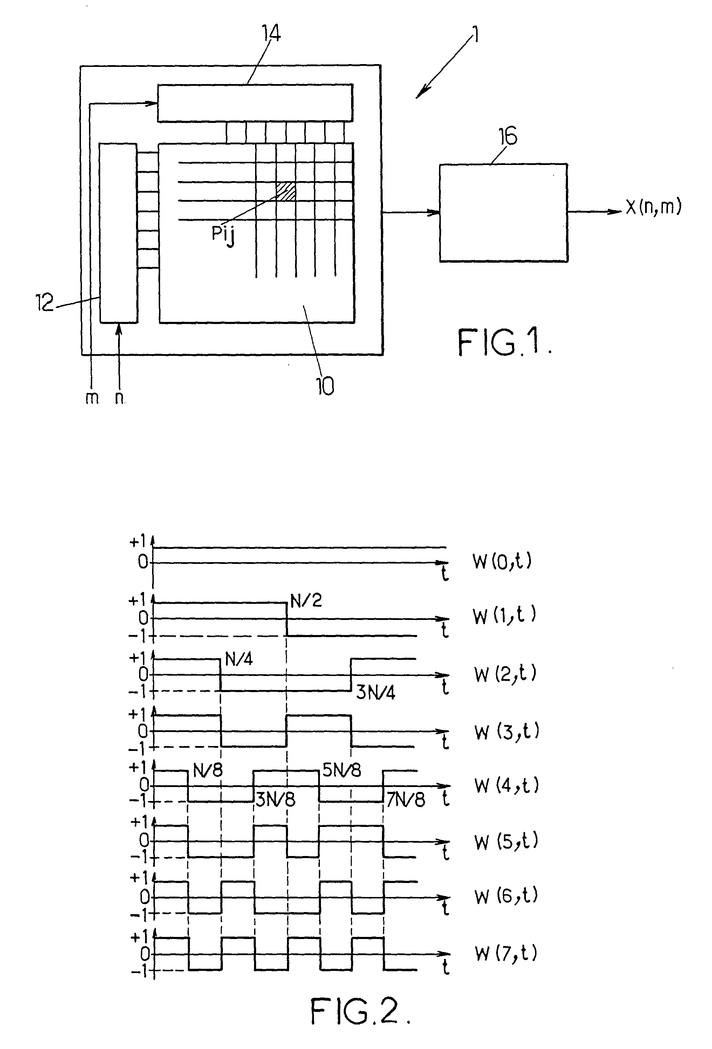

La structure globale d'un capteur d'image conforme à un mode de réalisation de la présente invention est représentée de façon schématique sur la figure 1.

Ce capteur 1 comprend une matrice 10 d'éléments photodétecteurs prévus pour recevoir la lumière provenant d'une scène optique à capter, et pour transformer la lumière reçue en des signaux électriques. Sur la figure 1, une partie seulement des éléments photodétecteurs est représentée. Les éléments photodétecteurs peuvent notamment être des photodiodes ou des phototransistors.

La matrice 10 peut comprendre autant de rangées que de colonnes d'éléments photodétecteurs. Par exemple, l'élément photodétecteur Pij situé dans la ième rangée et la jième colonne d'une matrice ayant N rangées et N colonnes, où N est un entier strictement positif et i et j sont des entiers compris entre 0 et N-1, reçoit un flux lumineux L(i,j) et le transforme en un signal de courant électrique noté x(i,j).

Les rangées d'éléments photodétecteurs de la matrice 10 sont connectées aux entrées d'un bloc 12 de génération et de mémorisation de fonctions de Walsh W(n,i), où n est un entier compris entre 0 et N-1. La structure détaillée du bloc 12 sera décrite plus tard.

De façon similaire, les colonnes d'éléments photodétecteurs de la matrice 10 sont connectées aux entrées d'un bloc 14 de génération et de mémorisation de fonctions de Walsh W(m,j), où m est un entier compris entre 0 et N-1. La structure détaillée du bloc 14 sera également décrite plus tard.

La sortie d'un module comprenant la matrice 10 d'éléments photodétecteurs et les blocs 12 et 14 de génération et de mémorisation de fonctions de Walsh est connectée à l'entrée d'un module 16 de pondération des signaux électriques x(i,j) par des fonctions calculées à partir de l'ensemble des fonctions de Walsh W(n,i) et W(m,j), et de sommation des signaux pondérés.

Le module 16 de pondération et de sommation sera décrit plus en détail ci-après. Il fournit en sortie NxN coefficients de transformée de Walsh-Hadamard X(n,m) qui représentent la scène optique captée. La définition et le procédé d'obtention de ces coefficients vont maintenant être donnés.

La scène optique à capter est quelconque. Au cours d'une première étape, on mesure des paramètres radiométriques provenant de la scène optique sous forme de NxN signaux électriques x(i,j).

Dans un mode de réalisation où l'acquisition de la scène optique se fait au moyen d'une matrice 10 de NxN photodiodes, le signal électrique x(i,j) est le courant inverse Id(i,j) qui traverse la photodiode Pij située dans la ième rangée et la jième colonne, et vaut Id(i,j) = K(i,j) x $\phi$(i,j) + In(i,j), où K(i,j) désigne le coefficient de conversion photoélectrique de la photodiode Pij, $\phi$(i,j) désigne le flux optique issu de la scène optique et capté par la photodiode Pij, et In(i,j) représente un courant de fuite intrinsèque dans la photodiode Pij, appelé courant d'obscurité.

Dans un autre mode de réalisation, où l'acquisition de la scène optique se fait au moyen d'une matrice 10 de NxN phototransistors, le signal électrique x(i,j) est le courant collecteur, K(i,j) désigne le coefficient de conversion photoélectrique du phototransistor Pij, $\phi$(i,j) désigne le flux optique issu de la scène optique et capté par le phototransistor Pij, et In(i,j) représente un courant de fuite intrinsèque dans le phototransistor.

Au cours d'une deuxième étape, on engendre pour chaque signal x(i,j) une fonction de pondération Mnm(i, j), dite masque de Walsh-Hadamard. n et m sont des entiers compris entre 0 et N-1. Chaque masque vaut soit +1, soit -1. Pour obtenir le masque Mnm(i,j), on engendre tout d'abord une fonction de Walsh discrète à une dimension W(n, i), d'ordre n sur N points. On engendre cette fonction à partir de l'équation

$$W(n,i) = \prod_{r=0}^{p(n)-1} f(r,n,i)$$

où

$$f(r,n,i) = sgn[\cos(K_{r,n}.\, 2^r.\pi \cdot \frac{i}{N})],$$

où r est un entier, où n est un entier tel que

$$n = \sum_{r=0}^{p(n)-1} K_{r,n} \cdot 2^r \; avec \; K_{r,n} \in \{0,1\},$$

où p(n) est le nombre de chiffres binaires pour écrire l'entier n en base 2, où $\Pi$ est le signe "produit", et sgn est la fonction définie par sgn(x) = +1 si x≥0 et sgn(x) =1 si x<0. La figure 2 représente, à titre d'exemple non limitatif, les huit premières fonctions de Walsh analogiques à une dimension, en fonction du temps t, soit W(0,t), W(1,t),..., W(7,t), sur N points.

Toujours au cours de la deuxième étape, on engendre également une fonction de Walsh discrète à une dimension W(m,j), d'ordre m sur N points. On engendre cette fonction, de façon analogue à ce qui précède, à partir de l'équation

$$W(m,j) = \prod_{r=0}^{p(m)-1} f(r,m,j)$$

**4**

où

$$f(r,m,j) = sgn[\cos(K_{r,m} . 2^r . \pi . \frac{J}{N})],$$

où m est un entier tel que

$$m = \sum_{r=0}^{p(m)-1} K_{r,m} . 2^r \text{ avec } K_{r,m} \in \{0, 1\},$$

où p(m) est le nombre de chiffres binaires pour écrire l'entier m en base 2.

On obtient alors chaque masque Mnm(i,j) grâce à la formule :

$$Mnm(i,j) = W(n,i) \times W(m,j).$$

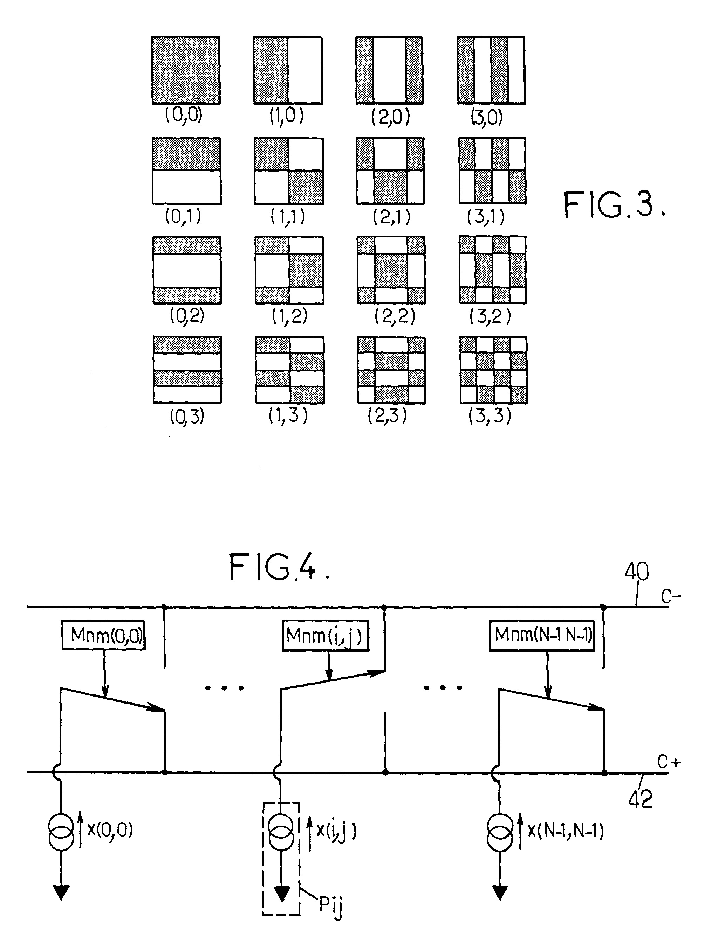

En termes de représentation d'images en noir et blanc, si on associe la valeur + 1 d'un masque au "noir" (niveau de gris le plus élevé) et la valeur -1 d'un masque au "blanc" (niveau de gris le plus bas), on peut représenter chaque masque par un motif en damier composé de portions noires et de portions blanches. La figure 3 représente à titre d'exemple les seize masques de pondération en damier pour N = 4. On a indiqué en dessous de chaque masque le couple (n,m) correspondant.

Au cours d'une troisième étape du procédé selon un mode de réalisation de l'invention, pour chaque couple (n,m), on pondère directement les NxN signaux électriques x(i,j) par les NxN masques Mnm(i,j) correspondants et on additionne les signaux électriques ainsi pondérés pour obtenir NxN coefficients de transformée de Walsh-Hadamard X(n,m), donnés chacun par la formule

$$X(n,m) = \sum_{i=0}^{N-1} \sum_{j=0}^{N-1} x(i,j) . Mnm(i,j),$$

et représentant la scène optique captée.

Les deuxième et troisième étapes du procédé vont maintenant être décrites plus en détail dans le cadre d'un mode particulier de réalisation. Il est clair, d'après les formules permettant d'obtenir les grandeurs décimales sgn, f, W et Mnm, que toutes ces grandeurs prennent uniquement la valeur +1 ou la valeur -1. Dans le mode particulier de réalisation qui va maintenant être décrit, on code toutes ces grandeurs par des variables binaires ayant le niveau logique "0" si la grandeur décimale correspondante vaut +1, ou le niveau logique "1" si la grandeur décimale correspondante vaut -1. Une multiplication de deux des grandeurs décimales codées se traduit par conséquent par une opération logique OU-exclusif.

Au cours de la deuxième étape décrite précédemment, on effectue alors pour chaque coupe (i,j), 0≤i≤N-1, 0≤j≤N-1, les étapes suivantes :

Pour obtenir la valeur de la variable binaire codant la grandeur décimale W(n,i), on effectue une itération suivant laquelle, successivement :

- on initialise la variable binaire codant W(n,i) au niveau logique "0";
- on initialise l'entier r défini précédemment à la valeur 0;
- pour chaque valeur de r, on effectue une opération OU-exclusif entre la variable binaire actuelle codant W(n,i) et la variable binaire codant la grandeur décimale f(r,n,i) préalablement obtenue à partir de l'équation donnée plus haut, on réactualise la variable binaire codant W(n,i) au niveau logique obtenu après l'opération OU-exclusif, puis on incrémente r de 1;

l'itération s'arrête lorsque l'entier r atteint la valeur p(n) définie plus haut. On obtient alors la valeur de la variable binaire codant W(n,i).

Pour obtenir la valeur de la variable binaire codant W(m,j), on effectue une itération similaire, à savoir, successivement :

- on initialise la variable binaire codant W(m,j) au niveau logique "0";
- on initialise l'entier r à la valeur 0;
- pour chaque valeur de r, on effectue une opération OU-exclusif entre la variable binaire actuelle codant W(m,j) et la variable binaire codant la grandeur décimale f(r,m,j) préalablement obtenue à partir de l'équation donnée plus haut, on réactualise la variable binaire codant W(m,j) au niveau logique obtenu après l'opération OU-exclusif, puis on incrémente r de 1;

l'itération s'arrête lorsque l'entier r atteint la valeur p(m) définie plus haut. On obtient alors la valeur de la variable binaire codant W(m,j).

Pour obtenir la valeur de la variable binaire codant Mnm (i,j), on effectue une opération OU-exclusif entre les variables binaires codant respectivement W(n,i) et W(m,j).

Au cours de la troisième étape décrite précédemment, et dans un mode particulier de réalisation, on réalise la pondération des signaux électriques x(i,j) par les masques Mnm(i,j) et la sommation des signaux électriques pondérés en déterminant une composante positive globale C+ et une composante négative globale C- du courant, la composante positive globale C+ étant la somme strictement positive, selon les lois de Kirchhoff, de tous les courants x(i,j) ayant pour fonction de pondération un masque Mnm(i,j) valant +1, et la composante négative globale C- étant la somme strictement positive, selon les lois de Kirchhoff, de tous les courants x(i,j) ayant pour fonction de pondération un masque Mnm(i,j) valant -1.

A cet effet, pour chaque couple (n,m), $0 \leq i \leq N-1$, $0 \leq m \leq N-1$ :

- on regroupe les entiers i, $0 \leq i \leq N-1$, en deux ensembles I+ et I-, et on regroupe les entiers j, $0 \leq j \leq N-1$ en deux ensembles J+ etJ-, de façon que :

$$\forall i \in I+, \ \forall j \in J+, \ Mnm(i,j) = +1$$

et

$$\forall i \in I-, \ \forall j \in J-, \ Mnm(i,j) = -1 \ ;$$

- en appliquantles lois de Kirchhoff, on additionne, d'une part, les courants x(i,j) pour lesquels i et j sont respectivement inclus dans les ensembles I+ et J+, et, d'autre part, les courants x(i,j) pour lesquels i et j sont respectivement inclus dans les ensembles I- et i-, de façon à obtenir la composante positive globale du courant

$$C + = \sum_{i \in I+, j \in J+} x(i, j)$$

et la composante négative globale du courant

$$C - = \sum_{i \in I-, j \in J-} x(i, j) \ ;$$

- on soustrait le courant C- au courant C+, ce qui fournit le coefficient de transformée de Walsh-Hadamard X(n,m) - C+ - C-.

La figure 4 est un schéma électrique qui illustre pour un couple (n,m) quelconque l'étape qui vient d'être décrite, à savoir, la séparation des courants issus des éléments photodétecteurs Pij en deux composantes globales positive C+ et négative C-.

Pour chaque couple (i,j), $0 \leq i \leq$ n-1, $0 \leq j \leq$ n-1, le masque Mnm(i,j) correspondant commande la commutation du courant x(i,j), soit vers une ligne 40 de contribution à la composante globale négative C-, soit vers une ligne 42 de contribution à la composante globale positive C+. Le courant x(i,j) est issu de l'élément photodétecteur Pij, qu'on a représenté schématiquement sous la forme d'un générateur de courant engendrant le courant x(i,j) et connecté à la masse.

Le choix des positions de commutation sur la figure 4 est arbitraire.

On additionne entre eux tous les courants commutés vers la ligne 40, pour obtenir la composante C-, et on additionne entre eux tous les courants commutés vers la ligne 42, pour obtenir la composante C+. L'étape ultérieure de soustraction C+ - C-, non représentée sur la figure 4, peut être effectuée à l'intérieur ou à l'extérieur du capteur d'image mettant en oeuvre le procédé décrit ici, par exemple, au moyen d'un simple amplificateur opérationnel.

Le capteur d'image déjà décrit de façon globale en se référant à la figure 1 met en oeuvre le procédé ci-dessus. Les blocs 12 et 14 et le module 16 du capteur vont maintenant être décrits de façon détaillée, dans un mode particulier de réalisation.

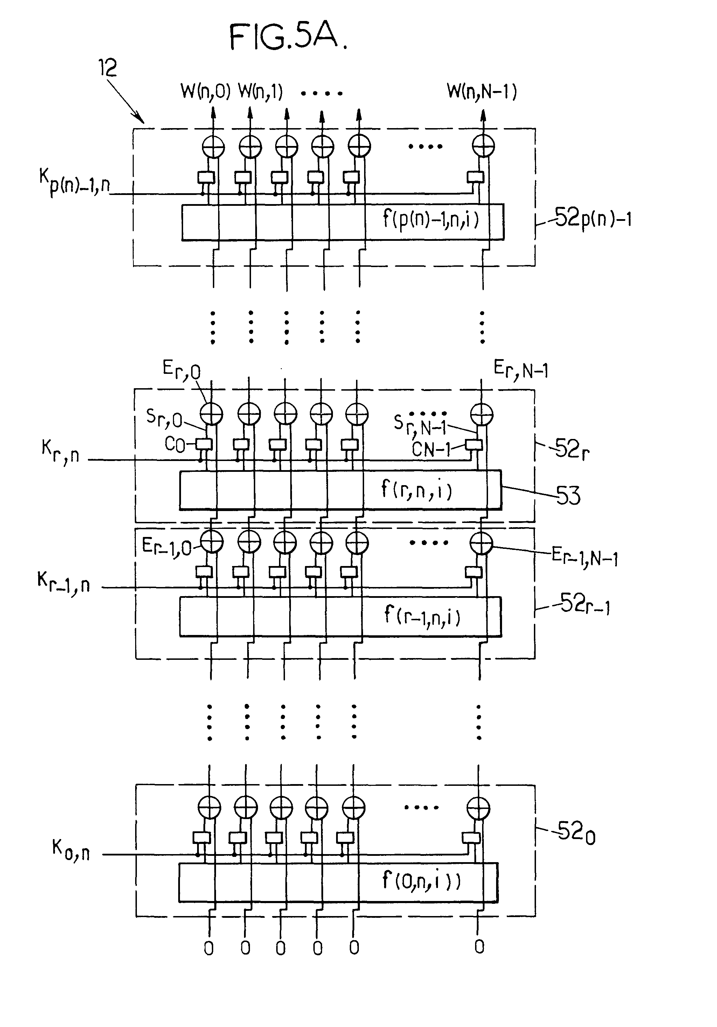

La figure 5A représente schématiquement le bloc 12 de génération et de mémorisation des N valeurs binaires codant respectivement les N fonctions de Walsh discrètes d'ordre n à une dimension, à savoir, W(n,i) pour tout i compris entre 0 et N-1.

Comme le montre la figure 5A, le bloc 12 comprend p(n) modules générateurs de fonction de Walsh, de structure identique, désignés par $52_0$, ..., $52_{r-1}$, $52_r$, ..., $52_{p(n)-1}$, disposés en cascade, ayant chacun N entrées parallèles et N sorties parallèles. Les p(n) modules ayant une structure identique, seul le module $52_r$, choisi arbitrairement, sera décrit en détail.

Il comprend une unité de calcul 53 ayant N entrées parallèles, qui reçoit sur chacune de ces entrées le bit $K_{r,n}$ défini plus haut, calcule la valeur binaire codant f(r,n,i) pour tout i compris entre 0 et N-1 à partir de l'équation donnée plus haut, à savoir, produit "0" si f(r,n,i) = +1 et produit "1" si f(r,n,i) = -1, et fournit les N bits de résultat sur ses N sorties parallèles $S_{r,0}$,..., $S_{r,N-1}$. Les éléments $C_0$,...,$C_{N-1}$ de l'unité 53 représentés sur la figure 5A représentent la partie arithmétique et logique de l'unité 53 effectuant l'opération sgn[cos($K_{r,n}.2^r.\pi.i/N$)] qui fournit, comme décrit précédemment, la valeur de f(r,n,i).

Le module $52_r$ comprend en outre N opérateurs OU-exclusif $E_{r,0}$, ... , $E_{r,N-1}$. Les premières entrées de chacun de ces opérateurs sont connectées respectivement aux sorties $S_{r,0}$, ..., $S_{r.N-1}$ de l'unité de calcul 53. Les secondes entrées de chacun des opérateurs OU-exclusif $E_{r,0}$, ..., $E_{r,N-1}$ sont connectées respectivement aux sorties des N opérateurs OU-exclusif $E_{r-1,0}$, ..., $E_{r-1.N-1}$ du module $52_{r-1}$, sauf dans le cas du module $52_0$, disposé à la base de la cascade, où les secondes entrées de chacun des opérateurs OU-exclusif sont alimentées par un niveau logique "0" d'initialisation.

Dans le module $52_{p(n)-1}$, disposé au sommet de la cascade, les sorties des N opérateurs OU-exclusif fournissent N bits codant respectivement les N fonctions de Walsh W(n,i), $0 \leq i \leq$ N-1, à savoir, fournissent le bit 0 si W(n,i) = +1 ou le bit 1 si W(n,i) = -1. Les sorties des N opérateurs OU-exclusif du module $52_{p(n)-1}$ sont connectées respectivement aux N entrées d'une première mémoire numérique classique appropriée (non représentée), par exemple une ROM, qui mémorise les N bits codant respectivement W(n,0),..., W(n,N-1).

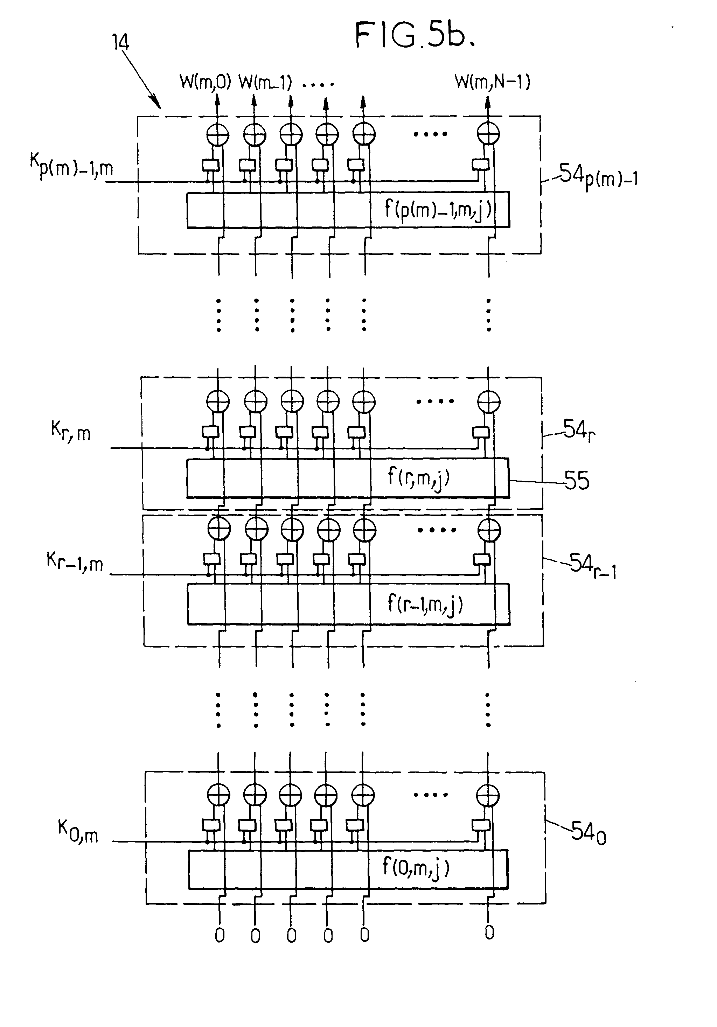

La figure 5B est analogue à la figure 5A. Elle ne sera donc décrite que brièvement. Elle représente schématiquement le bloc 14 de génération et de mémorisation des N valeurs binaires codant respectivement les N fonctions de Walsh discrètes d'ordre m à une dimension, à savoir, W(m,j) pour tout j compris entre 0 et N-1.

Le bloc 14 comprend p(m) modules générateurs de fonctions de Walsh, de structure identique, désignés par $54_0$,..., $54_{r-1}$, $54_r$,..., $54_{p(m)-1}$, disposés en cascade et connectés entre eux de la même façon que les modules $52_0$,..., $52_{r-1}$, $52_r$, ... , $52_{p(n)-1}$ de la figure 5A et ayant la même structure qu'eux. De même que le module $52_r$ décrit précédemment, le module $54_r$ comprend une unité de calcul 55 qui reçoit en entrée le bit $K_{r,m}$ défini plus haut et calcule la valeur binaire codant f(r,m,j) pour tout j compris entre 0 et N-1.

De même que pour le module $52_0$, les secondes entrées de chacun des opérateurs OU-exclusif du module $54_0$ sont alimentées par un niveau logique "0" d'initialisation.

De même que pour le module $52_{p(n)-1}$, les sorties des N opérateurs OU-exclusif du module $54_{p(m)-1}$ fournissent aux N entrées d'une seconde mémoire numérique classique appropriée (non représentée), par exemple une ROM, les N bits codant respectivement W(m,0),...,W(m,N-1).

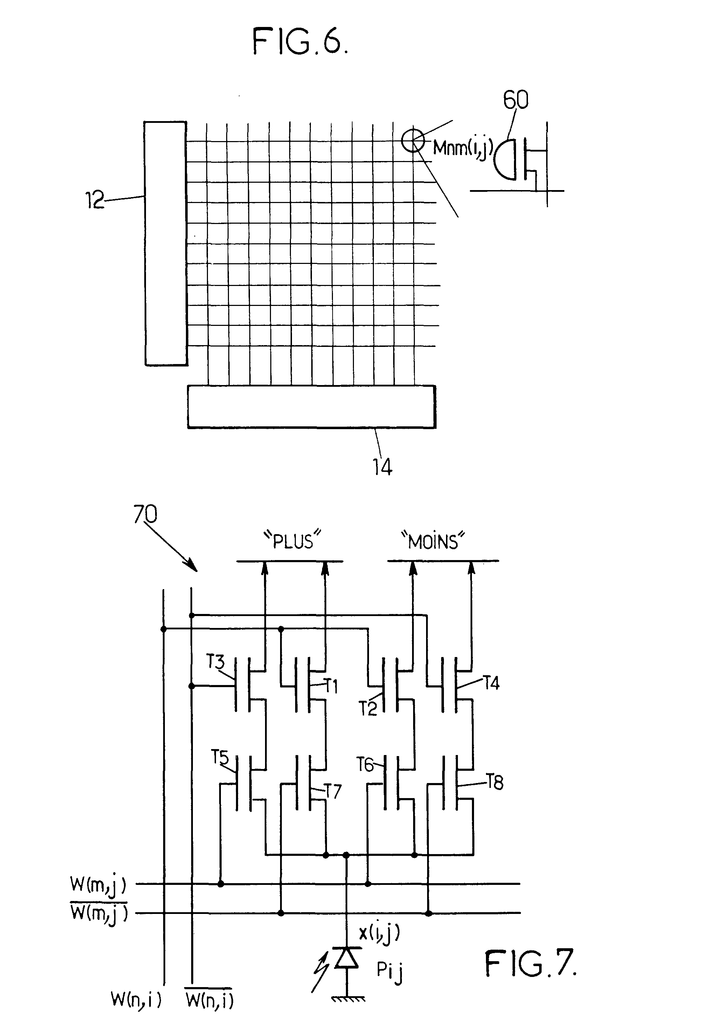

La figure 6 représente une partie de la structure globale du capteur d'image de l'invention déjà illustrée par la figure 1, en particulier le bloc 12 de génération et de mémorisation de fonctions de Walsh W(n,i) et le bloc 14 de génération et de mémorisation de fonctions de Walsh W(m,j). La figure 6 représente en outre, en vue agrandie, dans un mode particulier de réalisation, le schéma d'un circuit électronique engendrant un masque de Walsh-Hadamard à deux dimensions Mnm(i,j) à partir de deux fonctions de Walsh discrètes à une dimension, soit W(n,i) et W(m,j).

Ce circuit électronique est disposé à un croisement d'une ligne de sortie du bloc 12 et d'une ligne de sortie du bloc 14. NxN circuits électroniques identiques sont ainsi disposés aux NxN croisements entre les N lignes de sortie du bloc 14. Dans un mode particulier de réalisation, le circuit électronique comprend un opérateur OU-exclusif 60, dont une première entrée est connectée à la ligne de sortie du bloc 12 aboutissant au croisement considéré, et dont la seconde entrée est connectée à la ligne de sortie du bloc 14 aboutissant à ce même croisement. L'opérateur 60 effectue donc une opération OU-exclusif entre la valeur binaire codant W(n,i) et la valeur binaire codant W(m,j), pour une valeur déterminée du couple (i,j), et fournit en sortie la valeur binaire codant le masque Mnm(i,j). Comme décrit précédemment à l'aide de la figure 4, le masque Mnm(i,j) commande alors la commutation du courant x(i,j) de façon à fournir une contribution à la somme pondérée

$$X(n,m) = \sum_{i=0}^{N-1} \sum_{j=0}^{N-1} x(i,j) \cdot Mnm(i,j),$$

coefficient de transformée de Walsh-Hadamard.

Le schéma électronique de la figure 7 représente un commutateur complexe 70 formé d'un réseau de transistors NMOS, qui, simultanément, réalise l'opération OU-exclusif qui vient d'être décrite et fournit une contribution à la somme pondérée de l'ensemble des masques.

Le commutateur complexe 70 comprend un premier groupe de quatre transistors NMOS T1, T2, T3, T4. Les grilles des transistors T1 à T4 sont connectées à la sortie de la mémoire contenue dans le bloc 12 de génération et de mémorisation de fonctions de Walsh W(n,i); les grilles des transistors T1 et T2 reçoivent la valeur binaire codant W(n,i), et les grilles des transistors T3 et T4 reçoivent l'inverse logique de cette valeur, noté $\overline{W(n,i)}$, ce qui peut être réalisé très simplement en disposant un inverseur à la sortie correspondante de ladite mémoire. Le commutateur complexe 70 comprend également un second groupe de quatre transistors NMOS T5, T6, T7, T8. Les grilles des transistors T5 à T8 sont connectées à la sortie de la mémoire contenue dans le bloc 14 de génération et de mémorisation de fonctions de Walsh W(m,j); les grilles des transistors T5 et T6 reçoivent la valeur binaire codant W(m,j), et les grilles des transistors T7 et T8 reçoivent l'inverse logique de cette valeur, soit $\overline{W(m,j)}$, l'inversion pouvant être réalisée de même que décrit précédemment.

Les drains des transistors T5 à T8 sont connectés à la sortie de l'élément photodétecteur Pij, représenté sur la figure 7, dans un mode particulier de réalisation, sous forme d'une photodiode. Ainsi les drains des transistors T5 à T8 sont alimentés par le courant x(i,j).

Les sources des transistors T5, T6, T7, T8 sont respectivement connectées aux drains des transistors T3, T1, T2, T4.

Les sources des transistors T1 et T3 constituent des sorties, notées "Plus", du commutateur 70 où le courant x(i,j) est affecté d'un sens conventionnel positif, et les sources des transistors T2 et T4 constituent des sorties, notées "Moins", du commutateur 70 où le courant x(i,j) est affecté d'un sens conventionnel négatif.

NxN commutateurs complexes identiques à celui qui vient d'être décrit sont respectivement connectés aux sorties du bloc 14. L'ensemble de ces NxN commutateurs forme le module 16 de pondération et de sommation mentionné dans la description de la figure 1.

Dans un mode particulier de réalisation, le capteur d'image comprend un circuit VLSI qui regroupe les moyens précédemment décrits et réalise les opérations mentionnées ci-dessus en temps réel.

La présente invention trouve une application particulièrement intéressante, mais non exclusive, dans le domaine des radiocommunications mobiles, pour des dispositifs portatifs exigeant une consommation d'énergie aussi faible que possible et un encombrement très réduit, comme par exemple en visiophonie sous la norme GSM (Groupe Spécial Mobile). Elle serait cependant utilisable dans d'autres domaines et notamment ceux de la télésurveillance optique et de la télévision.

**Revendications**

1.　Procédé pour fournir une représentation d'une scène optique par transformation de Walsh-Hadamard, suivant lequel :

　　(a) on mesure des paramètres radiométriques de NxN points représentant une scène optique réelle à deux dimensions sous forme de NxN signaux électriques respectifs x(i,j), où N est un entier strictement positif, et i et j sont des entiers compris entre 0 et N-1, représentant lesdites deux dimensions ;
　　(b) on engendre NxN fonctions de pondération, dites masques, respectivement associées aux NxN signaux électriques x(i,j), ces fonctions ne prenant que la valeur +1 ou -1, et étant notées Mnm(i,j), où n et m sont des entiers compris entre 0 et N-1, chaque masque étant obtenu par la formule :

$$Mnm(i,j) = W(n,i) \times W(m,j)$$

où W(a,b) désigne la fonction de Walsh discrète, à une dimension, d'ordre a sur N points, donnée par la formule :

$$W(a,b) = \prod_{r=0}^{p(a)-1} f(r,a,b)$$

où

$$f(r,a,b) = sgn\left[ \cos\left( K_{r,a}.2^r.\pi.\frac{b}{N} \right) \right],$$

où r est un entier,
où b est un entier compris entre 0 et N-1,
où a est un entier tel que

$$a = \sum_{r=0}^{p(a)-1} K_{r,a}.2^r \quad avec\ K_{r,a} \in \{0,1\},$$

où p(a) est le nombre de chiffres binaires pour écrire l'entier a en base 2,
où $\Pi$ est le signe "produit"
et sgn est la fonction définie par sgn(x) = +1 si x $\geq$ 0 et sgn (x) = -1 si x < 0 ;

(c) pour chaque couple (n,m), on pondère directement lesdits NxN signaux électriques x(i,j) par lesdits NxN masques Mnm(i,j) correspondants et on additionne les signaux électriques pondérés pour obtenir NxN coefficients de transformée de Walsh-Hadamard X(n,m), donnés chacun par la formule :

$$X(n,m) = \sum_{i=0}^{N-1} \sum_{j=0}^{N-1} x(i,j).Mnm(i,j),$$

et représentant la scène optique captée, caractérisé en ce qu'on code les grandeurs décimales sgn, f, W et Mnm, qui ne prennent que la valeur +1, respectivement la valeur -1, par des variables binaires ayant le niveau logique "0" si la grandeur décimale correspondante vaut +1, ou le niveau logique "1" si la grandeur décimale correspondante vaut -1,
et suivant lequel l'étape (b) comprend les étapes selon lesquelles, pour chaque couple (i,j), 0 $\leq$ i $\leq$ N-1, 0 $\leq$ j $\leq$ N-1 :

- on initialise la variable binaire codant W(n,i) au niveau logique "0",
- on initialise r à 0,
- pour chaque valeur de r, on effectue une opération OU-exclusif entre la variable binaire actuelle codant W(n,i) et la variable binaire codant f(r,n,i), on réactualise la variable binaire codant W(n,i) à la valeur obtenue, puis on incrémente r de 1, jusqu'à ce que r = p (n) ,

de sorte qu'on obtient la valeur de la variable binaire codant W(n,i),

- on initialise la variable binaire codant W(m,j) au niveau logique "0",
- on initialise r à 0,
- pour chaque valeur de r, on effectue une opération OU-exclusif entre la variable binaire actuelle codant W(m,j) et la variable binaire codant f(r,m,j), on réactualise la variable binaire codant W(m,j) à la valeur obtenue, puis on incrémente r de 1, jusqu'à ce que r = p(m),

de sorte qu'on obtient la valeur de la variable binaire codant W(m,j).

2. Procédé selon la revendication 1, caractérisé en ce que l'étape (b) comprend en outre l'étape suivant laquelle on effectue une opération OU-exclusif entre la variable binaire codant W(n,i) et la variable binaire codant W(m,j), de sorte qu'on obtient la valeur de la variable binaire codant Mnm(i,j).

3. Procédé selon la revendication 1, dans lequel les signaux électriques x(i,j) sont des courants, caractérisé en ce que l'étape (c) comprend les étapes suivant lesquelles, pour chaque couple (n,m), $0 \le n \le N-1$, $0 \le m \le N-1$ :

- on détermine quatre ensembles I+, J+, I-, J- définis respectivement par

$$\forall i \in I+, \ \forall j \in J+, \ Mnm(i,j) = +1$$

et

$$\forall i \in I-, \ \forall j \in J-, \ Mnm(i,j) = -1 \ ;$$

- on effectue une sommation strictement positive de courant selon les lois de Kirchhoff pour obtenir une composante positive globale C+ et une composante négative globale C- du courant, définies respectivement par

$$C+ = \sum_{i \in I+, \, j \in J+} x(i,j) \quad \text{et} \quad C- = \sum_{i \in I-, \, j \in J-} x(i,j) \quad ;$$

- on soustrait le courant C- au courant C+, ce qui fournit le coefficient de transformée de Walsh-Hadamard recherché X(n,m) = C+ - C-.

4. Capteur d'image mettant en oeuvre le procédé de codage selon l'une quelconque des revendications 1 à 3, caractérisé en ce qu'il comprend :

- NxN moyens photodétecteurs (Pij) agencés sous forme d'une matrice (10) à N rangées et N colonnes, pour transformer un signal lumineux L(i,j), $0 \le i \le N-1$, $0 \le j \le N-1$, reçu en provenance de la scène optique dans la ième rangée et la jième colonne, en un signal de courant électrique x(i,j),
- p(n) premiers moyens ($52_0$, .., $52_{r-1}$, $52_r$, ..., $52_{p(n)-1}$) générateurs de fonction de Walsh, numérotés par leur rang r, $0 \le r \le p(n)-1$, qui comprennent chacun

  ■ des moyens de calcul (53) qui reçoivent le bit $K_{r,n}$ en entrée, calculent la valeur de f(r,n,i) pour tout i, $0 \le i \le N-1$, et fournissent en sortie le bit "0" si f(r,n,i) = +1 ou le bit "1" si f(r,n,i) = -1, et
  ■ N opérateurs OU-exclusif disposés en parallèle, une première entrée de chacun des N opérateurs de rang $r \ge 0$ étant connectée à la sortie desdits moyens de calcul, et une seconde entrée de chacun des N opérateurs ($E_{r,0}$, .., $E_{r,N-1}$) de rang $r \ge 1$ étant respectivement connectée à la sortie correspondante de chacun des N opérateurs ($E_{r-1,0}$, ..., $E_{r-1,N-1}$) de rang r-1, la seconde entrée de chacun des N opérateurs de rang r = 0 étant alimentée par un niveau logique "0" d'initialisation, les N opérateurs OU-exclusif de rang r = p(n)-1 fournissant en sortie N bits codant les N fonctions de Walsh W(n,i) pour tout i, $0 \le i \le N-1$, à savoir, valant 0 si W(n,i)= +1 ou valant 1 si W(n,i) = -1 ;

- des premiers moyens de mémoire, comprenant N entrées respectivement connectées aux N sorties des premiers moyens générateurs de rang p(n)-1, pour mémoriser la valeur de W(n,i) pour tout i, $0 \leq i \leq$ N-1 ;
- p (m) seconds moyens ($54_0$, ..., $54_{r-1}$, $54_r$, .., $54_{p(m)-1}$) générateurs de fonction de Walsh, numérotés par leur rang r, $0 \leq r \leq$ p(m)-1, qui comprennent chacun :

   ■ des moyens de calcul qui reçoivent le bit $K_{r,m}$ en entrée, calculent la valeur de f(r,m,j) pour tout j, $0 \leq j \leq$ N-1, et fournissent en sortie le bit "0" si f(r,m,j) = +1 ou le bit "1" si f(r,m,j) = -1, et
   ■ N opérateurs OU-exclusif disposés en parallèle, une première entrée de chacun des N opérateurs de rang $r \geq 0$ étant connectée à la sortie desdits moyens de calcul, et une seconde entrée de chacun des opérateurs de rang $r \geq 1$ étant respectivement connectée à la sortie correspondante de chacun des N opérateurs de rang r-1, la seconde entrée de chacun des opérateurs de rang r = 0 étant alimentée par un niveau logique "0" d'initialisation, les N opérateurs OU-exclusif de rang r = p(m)-1 fournissant en sortie N bits codant les N fonctions de Walsh W(m,j) pour tout j, $0 \leq j \leq$ N-1, à savoir, valant 0 si W(m,j) = +1 ou valant 1 si W(m,j) = -1 ; et

- des seconds moyens de mémoire, comprenant N entrées respectivement connectées aux N sorties des seconds moyens générateurs de rang p(m)-1, pour mémoriser la valeur de W(m,j) pour tout j, $0 \leq j \leq$ N-1 ;et
- NxN éléments à état solide connectés respectivement à l'une des N sorties des premiers moyens de mémoire et à l'une des N sorties des seconds moyens de mémoire, lesquels NxN éléments à état solide calculent respectivement la valeur de la variable binaire codant l'un des NxN masques de Walsh-Hadamard Mnm(i,j) et affectent le courant x(i,j) correspondant d'un sens conventionnel positif ou négatif suivant le niveau logique de la variable binaire codant Mnm(i,j), la sommation selon les lois de Kirchhoff des courants ainsi obtenus fournissant en sortie NxN coefficients de transformée de Walsh-Hadamard X(n,m), $O \leq n \leq$ N-1, $0 \leq m \leq$ N-1, de la scène optique captée.

5.  Capteur d'image selon la revendication 4, caractérisé en ce que les moyens photodétecteurs comprennent une matrice de photodiodes.

6.  Capteur d'image selon la revendication 5, caractérisé en ce que les moyens photodétecteurs comprennent une matrice de phototransistors.

7.  Capteur d'image selon l'une quelconque des revendications 4 à 6, caractérisé en ce que lesdits NxN éléments à état solide comprennent NxN opérateurs OU-exclusif (60), une première entrée de chaque opérateur (60) étant connectée à la ième sortie des premiers moyens de mémoire et recevant la valeur binaire codant W(n,i), et une seconde entrée de chaque opérateur (60) étant connectée à la jième sortie des seconds moyens de mémoire et recevant la valeur binaire codant W(m,j), chaque opérateur OU-exclusif (60) fournissant en sortie une valeur binaire codant le masque de Walsh-Hadamard Mnm(i,j).

8.  Capteur d'image selon l'une quelconque des revendications 4 à 6, caractérisé en ce que lesdits NxN éléments à état solide comprennent, pour chaque couple (i,j) $0 \leq i \leq$ N-1, $0 \leq j \leq$ N-1 :

- un premier groupe de quatre transistors NMOS (T1, T2, T3, T4), les grilles de deux de ces transistors (T1, T2) recevant la valeur binaire codant W(n,i), et les grilles des deux autres transistors (T3, T4) recevant l'inverse logique de cette valeur, et
- un second groupe de quatre transistors NMOS (T5, T6, T7, T8), les grilles de deux de ces transistors (T5, T6) recevant la valeur binaire codant W(m,j), et les grilles des deux autres transistors (T7, T8) recevant l'inverse logique de cette valeur,

   les drains des quatre transistors du second groupe (T5, T6, T7, T8) étant connectés à la sortie du moyen photodétecteur (Pij) situé dans la ième rangée et la jième colonne de façon à recevoir le courant x(i,j), les sources des quatre transistors du second groupe (T5, T6, T7, T8) étant respectivement connectées aux drains des quatre transistors du premier groupe (T3, T1, T2, T4), et les sources de deux des transistors du premier groupe (T1, T3) constituant des sorties où le courant x(i, j) est affecté d'un sens conventionnel positif, et les sources des deux autres transistors du premier groupe (T2, T4) constituant des sorties où le courant x(i,j) est affecté d'un sens conventionnel négatif.

**Claims**

1.  A method of providing a digital representation of an optical scene comprising the steps of :

a) measuring radiometric values of NxN points representing a real two-dimensional optical scene are measured in the form of NxN respective electric signals x (i,j), where N is a positive interger and $i$ and $i$ are integers in the range 0 to N-1, representing said two dimensions ;
b) generating NxN masks respectively associated with the NxN electrics signals x (i,j), said masks taking the values + 1 or - 1 only, and being written Mnm (i,j), where $n$ and $m$ are integers lying in the range 0 to N-1, each mask being obtained from :

$$Mnm\ (i,j) = W\ (n,i) \times W\ (m,j)$$

where W (a,b) designates the discrete one-dimensional Walsh function of order $a$ on N points, given by the equation :

$$W\ (a,b) = \prod_{r=0}^{p(a)-1} f(r,a,b)$$

where f (r,a,b) = sgn [cos ($K_{r,a}.2^r.\pi.$ (b/N)],
where $r$ is an integer,
where $b$ is an integer lying in the range 0 to N-1, and
where $a$ is an integer such that:

$$a = \sum_{r=0}^{p(a)-1} K_{r,a}.2^r \quad \text{with } K_{r,,a} \in \{0,1\},$$

where p (a) is the number of binary digits needed to write the integer a in base 2,
where $\Pi$ the "product" symbol, and
sgn is the function defined by sgn (x) = +1 if x $\geq$ 0, and sgn (x) = -1 if x < 0;

c) for each couple (n,m), weighing said NxN electric signals x (i,j) directly by the corresponding NxN masks Mnm (i,j) and adding the weighed electric signals to obtain NxN coefficients of the Wash-Hadamard transform X (n,m), each given by the equation :

$$X(n,m) = \sum_{i=0}^{N-1} \sum_{j=0}^{N-1} x(i,j).Mnm(i,j),$$

and representing the optical scene,
wherein each of the decimal values sgn, f, w and Mmn, which take the value +1 or -1 only, are encoded as binary variables which are "0" logic level if the respective decimal value is +1 or logic level "1" if the respective decimal value is -1,
and wherein step (b) comprises, for each couple (i,j), 0 $\leq$ I $\leq$ N-1, O$\leq$j$\leq$N-1:

•   initialising the binary variable encoding W (n,i) to logic level "0";

- for each value of the integer r, performing an XOR operation between the current binary variable which codes W (n,i) and the binary variable which codes f(r,n,i), updating the binary variable which codes W(n,i) to the logic level obtained after the XOR operation, and incrementing r by 1, until r=p (n); whereby the value of the binary variable coding W(n,i) is obtained,
- initialising the binary variable encoding W (m,j) to logic level "0";
- initialising integer r to 0; and
- for each value of r, performing an XOR operation between the current binary varible encoding W (m, j) and the binary variable encoding f (r,n,j), updating the binary variable which codes W (m,j) to the logic level obtained after the XOR operation, and incrementing r by 1, until r=p(m); whereby the value of the binary variable coding W (m,j) is obtained.

2. A method according to claim 1, wherein step (b) further comprises :

- performing an XOR operation between the binary variable encoding W(n,i) and the binary variable encoding W (m,j), whereby the value of the binary variable coding Mnm (i,j) is obtained.

3. A method according to claim 1, wherein the electrical signal x (i,j) are currents, and wherein step c) comprises, for each couple (n,m), where $0 \leq n \leq N-1$, $0 \leq m \leq N-1$ :

- determining four sets I+, J+, I- and J-, such that:

$$\forall i \in I+, \ \forall j \in J+, \ Mnm\ (i,j) = +1$$

and

$$\forall i \in I-, \ \forall j \in J-, \ Mnm\ (i,j) = -1\ ;$$

- adding the currrents x (i,j) on a strictly positive basis according to the Kirchoffs laws, for obtaining an overall positive component C+ of the current and an overall negative component C- of the current, such that:

$$C+ = \sum_{i \in I+, j \in J+} x(i, j)$$

and,

$$C- = \sum_{i \in I-, j \in J-} x(i, j)$$

- substracting the current C- from the current C+, thereby providing a coefficient of the Walsh-Hadamard transform X (n,m) = C+ - C-.

4. Image sensor carrying out a method according to any one of claims 1 to 3 comprising :

- a matrix arrangement (10) of NxN photodetectors (Pij) means having N rows and N columns, to transform a light signal L (i,j), $0 \leq I \leq N-1$, $0 \leq j \leq N-1$, received from the optical scene in a i-th row and a j-th column into an electric current signal x (i,j);
- p(n) first Walsh function generators, numbered by rank r, $0 \leq r \leq p(n)-1$, each comprising :

  - calculation means receiving the bit $K_{r,n}$ as an input, and calculating the value of f (r,n,i) for all i, $0 \leq I \leq N-1$, and providing as an output bit "0" if f(r,n,i) = +1 or bit "1" if (r,n,i) = -1; and
  - N parallel-connected XOR operators, a first input of each of the N operators of rank $r \geq 0$ being connected

to the output of said calculation means, and a second input of each of the N operators of rank r ≥ 1 being connected to the respective corresponding output of the N XOR operators of rank r-i, the second input of each of the N operators of rank r = 0 being fed with an initialisation logic level "0" ;

- the N XOR operators of rank r = p(n) -1 delivering as outputs the N bits encoding the N Walsh functions W (n,i) for all i, 0 ≤ i ≤ N-1, i.e. of value 0 if W(n,i) = +1, or if W(n,i) = -1 ;

- first memory means, having N inputs respectively connected to the N outputs of the first generator means of rank p(n)-1 for storing the values of W(n,i) for all i, 0 ≤ i ≤ N-1 ;
- p(m) second Walsh function generators, numbered by rank r, 0 ≤ r ≤ p(m)-1, each comprising :

  - calculation means receiving the bit $K_{r,m}$ as an input, and calculating the value of f(r,m,j) for all j, 0 ≤ j ≤ N-1, and providing as an output bit "0" if f (r,m,j) = +1 or bit "1" if f (r,m,j) = -1; and
  - N parallel-connected XOR operators, a first input of each of the N operators of rank r ≥ 0 being connected to the output of said calculation means, and a second input of each of the N operators of rank r ≥ 1 being connected to the respective corresponding output of the N XOR operators of rank r-1, the second input of each of the N operators of rank r = 0 being fed with an initialisation logic level "0";
  - the N XOR operators of rank r = p(m)-1 delivering as outputs the N bits encoding the N Walsh functions W(m,j) for all j, 0 s j ≤ N-1, i.e. of value 0 if W(m,j) = +1, or 1 if W(m,j) = -1;

- second memory means, having N inputs respectively connected to the N outputs of the second generator means of rank p(m)-1 for storing the values of W(m,j) for all j, 0 ≤ j ≤ N-1; and
- NxN solid state elements respectively connected to one of the N outputs of the first memory means and one of the N outputs of the second memory means, which NxN solid state elements calculate the respective values of the binary variables encoding the NxN Walsh-Hadamard masks Mnm (i,j), giving the corresponding current x(i,j) a positive or a negative conventional sign depending on the logic level of the binary variable encoding Mnm (i,j), whereby summing the currents obtained in this way in application of Kirchhoffs laws provides as outputs NxN coefficients of the Walsh-Hadamard transform X (n,m), 0 ≤ n ≤ N-1, 0 ≤ m ≤ N-1 of the optical scene.

5. Image sensor according to claim 4, wherein the photodetector means comprise an array of photodiodes.

6. Image sensor according to claim 4, wherein the photodetector means comprise an array of phototransistors.

7. Image sensor according to any of claims 4 to 6, wherein said NxN solid state elements comprise NxN XOR operators (60), a first input of each XOR operator (60) being connected to the i-th output of the first memory means and receiving the binary value encoding W(n,i), and a second input of each operator (60) being connected to the j-th output of the second memory means and receiving the binary value encoding W(m,j), each XOR operator (60) delivering as an output a binary value encoding the Walsh-Hadamard mask Mnm(i,j).

8. Image sensor according to any one of claims 4 to 6, wherein said NxN solid state elements comprise, for each couple (i.j), 0≤i≤N-1, 0≤j≤N-1 :

  - a first group of four NMOS transistors, the grids of two of said transistors of said first group receiving the binary value encoding W(n,i) and the grids of the other two transistors receiving the logical inverse of said binary value encoding W(n,j), and
  - a second group of four NMOS transistors, the grids of two of said transistors of said second group receiving the binary value encoding W(m,j). and the grids of the other two transistors receiving the logical inverse of said binary value encoding W(m,j),

    the drains of the four transistors of said second group being connected to that output of the photodetector means which is situated in the i-th row and the j-th column so as to receive the current x(i,j),
    the sources of the four transistors of said second group being connected respectively to the drains of the four transistors of said first group, and
    the sources of two of the transistors of said first group constituting outputs where the current x(i,j) has a positive conventional sign, and the sources of the other two transistors of said first group constituting outputs where the current x(i,j) has a negative conventional sign.

**Patentansprüche**

1. Verfahren zur Bereitstellung einer Darstellung einer optischen Szene durch Walsh-Hadamard-Transformation, bei dem:

   (a) an NxN Punkten, welche eine zweidimensionale reale optische Szene darstellen, Strahlungsparameter in Form NxN jeweiliger elektrischer Signale x(i,j) gemessen werden, wobei N eine streng positive ganze Zahl ist und i und j ganze Zahlen sind, welche zwischen 0 und N-1 liegen und die beiden Dimensionen darstellen,
   (b) NxN Wichtungsfunktionen - genannt Masken - erzeugt werden, welche den NxN elektrischen Signalen x(i,j) zugeordnet sind, wobei diese Funktionen lediglich den Wert +1 oder -1 annehmen und als Mnm(i,j) notiert werden, wobei n und m ganze Zahlen sind, welche zwischen 0 und N-1 liegen, wobei jede Maske durch die Formel:

$$Mnm(i,j) = W(n,i) \times W(m,j)$$

   erhalten wird, wobei W(a,b) die diskrete Walsh-Funktion einer Dimension der Ordnung mit N Punkten bezeichnet, die gegeben ist durch die Formel:

$$W(a,b) = \prod_{r=0}^{p(a)-1} f(r,a,b)$$

   wobei

$$f(r,a,b) = sgn\left[ \cos\left( K_{r,a}.2^r.\pi.\frac{b}{N} \right) \right],$$

   wobei r eine ganze Zahl ist,
   wobei b eine ganze Zahl ist, die zwischen 0 und N-1 liegt,
   wobei a eine ganze Zahl ist mit

$$a = \sum_{r=0}^{p(a)-1} K_{r,a}.2^r \quad mit \quad K_{r,a} \in \{0,1\},$$

   wobei p(a) die Anzahl der binären Ziffern ist, um die ganze Zahl a auf Basis 2 zu schreiben,
   wobei $\Pi$ das "Produkt"-Zeichen ist und
   wobei sgn eine Funktion ist, welche durch sgn(x) = +1 für x $\geq$ 0 und sgn(x) = -1 für x < 0 definiert ist,

   (c) für jedes Paar (n,m) die NxN elektrischen Signale x(i,j) direkt mit den entsprechenden NxN Masken Mnm(i,j) gewichtet werden und die gewichteten elektrischen Signale addiert werden, um NxN Walsh-Hadamard-transformierte Koeffizienten X(n,m) zu erhalten, welche gegeben sind durch die Formel:

$$X(n,m) = \sum_{i=0}^{N-1} \sum_{j=0}^{N-1} x(i,j).Mnm(i,j)$$

und die erfaßte optische Szene darstellen,

**dadurch gekennzeichnet,** daß die Dezimalgrößen sgn, f, W und Mnm, die lediglich den Wert +1 oder den Wert -1 annehmen, durch Binärvariablen mit dem logischen Niveau "0", falls die entsprechende Dezimalgröße +1 beträgt, oder dem logischen Niveau "1", falls die entsprechende Dezimalgröße -1 beträgt, codiert werden und daß Schritt (b) Schritte umfaßt, gemäß denen für jedes Paar (i,j), $0 \leq i \leq N-1$, $0 \leq j \leq N-1$ :

- die W(n,i) codierende Binärvariable mit dem logischen Niveau "0" initialisiert wird,
- r mit 0 initialisiert wird,
- für jeden Wert von r eine Exklusiv-ODER-Operation zwischen der aktuellen Binärvariable, die W(n,i) codiert, und der f(r,n,i) codierenden Binärvariable durchgeführt wird, die W(n,i) codierende Binärvariable mit dem erhaltenen Wert aktualisiert wird und sodann r um 1 erhöht wird, bis r = p(n), um so den Wert der W(n,i) codierenden Binärvariable zu erhalten,
- die W(m,j) codierende Binärvariable mit dem logischen Niveau "0" initialisiert wird,
- r mit 0 initialisiert wird,
- für jeden Wert von r eine Exklusiv-ODER-Operation zwischen der aktuellen Binärvariable, die W(m,j) codiert, und der f(r,m,j) codierenden Binärvariable durchgeführt wird, die W(m,j) codierende Binärvariable mit dem erhaltenen Wert aktualisiert wird und sodann r um 1 erhöht wird, bis r = p(m), um so den Wert der W(m,j) codierenden Binärvariable zu erhalten.

2. Verfahren nach Anspruch 1, dadurch gekennzeichnet, daß Schritt (b) außerdem einen Schritt umfaßt, gemäß dem eine Exklusiv-ODER-Operation zwischen der W(n,i) codierenden Binärvariable und der W(m,j) codierenden Binärvariable durchgeführt wird, um so den Wert der Binärvariable zu erhalten, die Mnm(i,j) codiert.

3. Verfahren nach Anspruch 1, bei dem die elektrischen Signale x(i,j) Ströme sind, dadurch gekennzeichnet, daß Schritt (c) Schritte umfaßt, gemäß denen für jedes Paar (n,m), $0 \leq n \leq N-1$, $0 \leq m \leq N-1$:

- vier Mengen I+, J+, I-, J- bestimmt werden, welche durch

$$\forall i \in I+,\ \forall j \in J+,\ Mnm(i,j) = +1$$

und

$$\forall i \in I-,\ \forall j \in J-,\ Mnm(i,j) = -1$$

definiert sind,

- eine streng positive Stromsummation nach dem Kirchhoffschen Gesetz durchgeführt wird, um eine positive Gesamtkomponente C+ und eine negative Gesamtkomponente C- des Stroms zu erhalten, die definiert sind durch

$$C+ = \sum_{i \in I+,\, j \in J+} x(i,j)$$

bzw.

$$C- = \sum_{i \in I-,\, j \in J-} x(i,j) \quad,$$

- der Strom C- vom Strom C+ subtrahiert wird, was den gesuchten Walsh-Hadamard-transformierten Koeffizienten X(n,m) = C+ - C- liefert.

4. Bildsensor zur Durchführung des Codierverfahrens nach einem der Ansprüche 1 bis 3, **dadurch gekennzeichnet,** daß er umfaßt:

- NxN Photodetektormittel (Pij), welche in Form einer Matrix (10) mit N Zeilen und N Spalten angeordnet sind, um ein aus der optischen Szene empfangenes Lichtsignal L(i,j), $0 \leq i \leq N-1$, $0 \leq j \leq N-1$, in der i-ten Zeile und der j-ten Spalte in ein elektrisches Stromsignal x(i,j) umzuwandeln,
- p(n) Walsh-Funktionsgeneratormittel ($52_0$, ..., $52_{r-1}$, $52_r$, ..., $52_{p(n)-1}$), welche durch ihren Rang r, $0 \leq r \leq p(n)-1$ numeriert sind und jeweils umfassen:

  - Berechnungsmittel (53), welche am Eingang das Bit $K_{r,n}$ erhalten, für alle i, $0 \leq i \leq N-1$, den Wert f(r,n,i) berechnen und am Ausgang das Bit "0" liefern, falls f(r,n,i) = +1, oder das Bit "1" liefern, falls f(r,n,i) = -1, und
  - N parallel angeordnete Exklusiv-ODER-Operatoren, wobei ein erster Eingang jedes der N Operatoren vom Rang $r \geq 0$ mit dem Ausgang der Berechnungsmittel verbunden ist und ein zweiter Eingang jedes der N Operatoren ($E_{r,0}$, ..., $E_{r,N-1}$) vom Rang $r \geq 1$ mit dem entsprechenden Ausgang des jeweiligen der N Operatoren ($E_{r-1,0}$, ..., $E_{r-1,N-1}$) vom Rang r-1 verbunden ist, wobei der zweite Eingang jedes der N Operatoren vom Rang r = 0 mit einem logischen Initialisierungsniveau "0" gespeist wird, wobei die N Exklusiv-ODER-Operatoren vom Rang r = p(n)-1 am Ausgang N Bits liefern, welche die N Walsh-Funktionen W(n,i) für alle i, $0 \leq i \leq N-1$, codieren und dabei den Wert 0 haben, falls W(n,i) = +1, oder den Wert 1 haben, falls W(n,i) = -1,

- erste Speichermittel mit N Eingängen, welche mit den N Ausgängen der ersten Generatormittel vom Rang p(n)-1 verbunden sind, um den Wert von W(n,i) für alle i, $0 \leq i \leq N-1$, zu speichern,
- p(m) zweite Walsh-Funktionsgeneratormittel ($54_0$, .., $54_{r-1}$, $54_r$, ..., $54_{p(m)-1}$), welche durch ihren Rang r, $0 \leq r \leq p(m)-1$, numeriert sind und jeweils umfassen:

  - Berechnungsmittel, welche das Bit $K_{r,m}$ am Eingang erhalten, den Wert von f(r,m,j) für alle j, $0 \leq j \leq N-1$, berechnen und am Ausgang das Bit "0" liefern, falls f(r,m,j) = +1, oder das Bit "1" liefern, falls f(r,m,j) = -1, und
  - N parallel angeordnete Exklusiv-ODER-Operatoren, wobei ein erster Eingang jedes der N Operatoren vom Rang $r \geq 0$ mit dem Ausgang der Berechnungsmittel verbunden ist und ein zweiter Eingang jedes der Operatoren vom Rang $r \geq 1$ mit dem entsprechenden Ausgang des jeweiligen der N Operatoren vom Rang r-1 verbunden ist, wobei der zweite Eingang jedes der Operatoren vom Rang r = 0 mit einem logischen Initialisierungsniveau "0" gespeist wird, wobei die N Exklusiv-ODER-Operatoren vom Rang r = p(m)-1 am Ausgang N Bits liefern, welche die N Walsh-Funktionen W(m,j) für alle j, $0 \leq j \leq N-1$, codieren und dabei den Wert 0 haben, falls W(m,j) = +1, oder den Wert 1 haben, falls W(m,j) = -1, und

- zweite Speichermittel mit N Eingängen, welche mit den N Ausgängen der zweiten Generatormittel vom Rang p(m)-1 verbunden sind, um den Wert von W(m,j) für alle j, $0 \leq j \leq N-1$, zu speichern, sowie
- NxN Festkörperelemente, welche jeweils mit einem der N Ausgänge der ersten Speichermittel und mit einem der N Ausgänge der zweiten Speichermittel verbunden sind, wobei diese NxN Festkörperelemente jeweils den Wert der eine der NxN Walsh-Hadamard-Masken Mnm(i,j) codierenden Binärvariable berechnen und den entsprechenden Strom x(i,j) entsprechend dem logischen Niveau der Mnm(i,j) codierenden Binärvariable in einem konventionellen positiven oder negativen Sinn beeinflussen, wobei die Summation der so erhaltenen Ströme nach dem Kirchhoff'schen Gesetz am Ausgang NxN Walsh-Hadamard-transformierte Koeffizienten X(n,m), $0 \leq n \leq N-1$, $0 \leq m \leq N-1$, der erfaßten optischen Szene liefert.

5. Bildsensor nach Anspruch 4, dadurch gekennzeichnet, daß die Photodetektormittel eine Matrix von Photodioden umfassen.

6. Bildsensor nach Anspruch 5, dadurch gekennzeichnet, daß die Photodetektormittel eine Matrix von Phototransistoren umfassen.

7. Bildsensor nach einem der Ansprüche 4 bis 6, dadurch gekennzeichnet, daß die NxN Festkörperelemente NxN Exklusiv-ODER-Operatoren (60) umfassen, wobei ein erster Eingang jedes Operators (60) mit dem i-ten Ausgang der ersten Speichermittel verbunden ist und den W(n,i) codierenden Binärwert erhält und wobei ein zweiter Eingang jedes Operators (60) mit dem j-ten Ausgang der zweiten Speichermittel verbunden ist und den W(m,j) codierenden Binärwert erhält, wobei jeder Exklusiv-ODER-Operator (60) am Ausgang einen Binärwert liefert, der die Walsh-Hadamard-Maske Mnm(i,j) codiert.

8. Bildsensor nach einem der Ansprüche 4 bis 6, dadurch gekennzeichnet, daß die NxN Festkörperelemente für jedes Paar (i,j), $0 \leq i \leq N-1$, $0 \leq j \leq N-1$, umfassen:

   - eine erste Gruppe von vier NMOS-Transistoren (T1, T2, T3, T4), wobei die Gate-Anschlüsse von zwei dieser Transistoren (T1, T2) den W(n,i) codierenden Binärwert erhalten und die Gate-Anschlüsse der beiden anderen Transistoren (T3, T4) die logische Inverse dieses Werts erhalten, und
   - eine zweite Gruppe von vier NMOS-Transistoren (T5, T6, T7, T8), wobei die Gate-Anschlüsse von zwei dieser Transistoren (T5, T6) den W(m,j) codierenden Binärwert erhalten und die Gate-Anschlüsse der beiden anderen Transistoren (T7, T8) die logische Inverse dieses Werts erhalten,

   wobei die Drain-Anschlüsse der vier Transistoren der zweiten Gruppe (T5, T6, T7, T8) mit dem Ausgang des in der i-ten Zeile und der j-ten Spalte angeordneten Photodetektormittels (Pij) verbunden sind, um den Strom x(i,j) zu erhalten, wobei die Source-Anschlüsse der vier Transistoren der zweiten Gruppe (T5, T6, T7, T8) mit den Drain-Anschlüssen der vier Transistoren der ersten Gruppe (T3, T1, T2, T4) verbunden sind und wobei die Source-Anschlüsse von zwei der Transistoren der ersten Gruppe (T1, T3) Ausgänge bilden, an denen der Strom x(i,j) in einem konventionellen positiven Sinn beeinflußt wird, und die Source-Anschlüsse der beiden anderen Transistoren der ersten Gruppe (T2, T4) Ausgänge bilden, an denen der Strom x(i,j) in einem konventionellen negativen Sinn beeinflußt wird.

FIG.1.

FIG.2.

FIG.3.

| | | | |
|---|---|---|---|
| (0,0) | (1,0) | (2,0) | (3,0) |
| (0,1) | (1,1) | (2,1) | (3,1) |
| (0,2) | (1,2) | (2,2) | (3,2) |
| (0,3) | (1,3) | (2,3) | (3,3) |

FIG.4.

40

C−

Mnm(0,0)    Mnm(i,j)    Mnm(N-1 N-1)

. . .    . . .

C+

42

x(0,0)    x(i,j)    x(N-1,N-1)

Pij

# FIG.5A.

# FIG.5b.

# FIG.6.

60

Mnm(i,j)

12

14

# FIG.7.

70

"PLUS"    "MOINS"

T3    T1    T2    T4

T5    T7    T6    T8

W(m,j)

$\overline{W(m,j)}$

x(i,j)

Pij

W(n,i)    $\overline{W(n,i)}$